# EUROPEAN PATENT APPLICATION

(11) **EP 1 890 285 A1**
(43) Date of publication of application: **20.02.2008**
(21) Application number: 06119082.3
(22) Date of filing: 17.08.2006
(51) Int. Cl.: G11B 7/0065, G11B 7/09, G03H 1/04

(54) **Method for servo control in a holographic storage system**

(71) Applicant: DEUTSCHE THOMSON-BRANDT GMBH, 78048 Villingen-Schwenningen (DE)
(72) Inventor: Przygodda, Frank, 78050 Villlingen-Schwenningen (DE)
(74) Representative: Schmidt-Uhlig, Thomas

(57) **Abstract**

The present invention relates to a method for servo control in a holographic storage system (1), and to a holographic storage system (1) using such method for servo control, which allows a correct focusing of the holographic beams despite tolerances within the optics and the holographic storage medium. According to the invention, a method for servo control in a holographic storage system (1) for holographic storage media (9) with a servo layer (92) for generating a servo signal using a servo light beam (14), is characterized in that an additional servo signal is generated from a reconstructed signal beam (10) .

## Description

The present invention relates to a method for servo control in a holographic storage system, and to a holographic storage system using such method for servo control.

In holographic data storage digital data are stored by recording the interference pattern produced by the superposition of two coherent laser beams. One advantage of holographic data storage is the possibility to store multiple data in the same volume, e.g. by changing the angle between the two beams or the wavelength, by using phase-coded reference beams, etc. To reliably retrieve the information, the physical properties of the holographic storage system during readout have to be the same as during recording. This means that the reference beam needs to have the same wavelength, the same wavefront error, the same beam profile, the same phase code if phase coding multiplexing is used, etc. Furthermore, the hologram has to be illuminated under the same angle and at the same position. For a precise controlling or pre-setting of the readout system, easily accessible position or address specific information is preferably stored directly on the holographic recording medium, favorably for each individual hologram. For example, in US2005/0135217 Tateishi et al. propose to store position markers in addition to the user data marks in each recorded hologram. However, as the position markers are stored in the holograms, they are only readable with sufficiently correct beam settings.

In EP1310952 Horimai et al. disclose the concept of having a substrate similar to a DVD (Digital Versatile Disk) as a guiding structure underneath a holographic disk medium. In this case a servo light beam is focused onto the holographic disk medium with the same objective lens as the holographic beam, i.e. the light beam used for holographic recording or readout. When the holographic and the servo beams are fixed relatively to each other, the servo beam can act as a reference for the beam used for holographic recording. The servo beam is focused onto the guiding structure, whereas the holographic beam is focused as appropriate for the chosen holographic recording process. This approach relies on the assumption that the light beams for reading or recording the holograms are focused correctly if the servo beam is. However, due to tolerances within the optics and the holographic storage medium this assumption may not always be correct.

It is an object of the invention to propose a method for servo control in a holographic storage system, which allows a correct focusing of the holographic beams despite tolerances within the optics and the holographic storage medium.

According to the invention, this object is achieved by a method for servo control in a holographic storage system for holographic storage media with a servo layer for generating a servo signal using a servo light beam, wherein an additional servo signal is generated from a reconstructed signal beam. The idea is to generate one or more additional error signals directly from the reconstructed signal beam, preferably by analyzing the detector image of the reconstructed signal beam. The additional error signal is then taken into account by the servo control. The solution has the advantage that the image quality is not degenerated by the focus tolerances in the optical system. Therefore, the bit error rate is reduced. Without the correction a large effort on error correction is necessary, which lowers the data capacity. A further advantage is that tolerances within the optics and the holographic storage medium are more relaxed, as the focus position of the holographic beams is controlled by the focus control. The costs of pickups and holographic storage media will hence be lower.

Advantageously, a sharpness index of the detector image of the reconstructed signal beam is determined. In this way no additional elements are necessary for generating the additional error signal, it is sufficient to analyze the reconstructed object beam , e.g. using the detector image. The sharpness index is a measure for the sharpness of the image. It is preferably determined using image processing algorithms, e.g. by measuring the gradients within the image, by performing a Fourier transform of the image and analyzing the frequency components, by performing autocorrelation of the image, or by measuring the variance of the image. These and other sharpness functions are discussed, for example, in: R. A. Muller and A. Buffington, "Real-time correction of atmospherically degraded telescope images through image sharpening", J. Opt. Soc. Amer., vol. 64, pp. 1200-1210, 1974.

The use of a sharpness index also allows to eliminate wavelength drifts of the source of the holographic beams. A wavelength mismatch leads to a defocusing of the detector image, i.e. a reduced sharpness. When the servo control repeatedly optimizes the sharpness of the detector image, a wavelength mismatch is automatically corrected.

Preferably, the additional error signal is taken into account by adding an offset to a control loop used for the servo light beam. A further possibility is to adjust an additional light beam influencing element for the reference beam of the holographic storage system in response to the additional error signal. The additional light beam influencing element is, for example, a lens, a liquid crystal element, or an optical element with a variable focal length.

In order to implement a method according to the invention, a servo controller for a holographic storage system for holographic storage media with a servo layer for generating a servo signal using a servo light beam, advantageously is adapted to generate an additional servo signal from a reconstructed signal beam. For this purpose the servo controller preferably has an image processor for determining a sharpness index of a detector image of the reconstructed signal beam.

A holographic storage system for holographic storage media with a servo layer preferably is adapted for performing a method according to the invention for servo control.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically depicts a holographic storage system implementing a method for servo control according to the invention, and
- Fig. 2: shows a cross sectional view of a holographic recording medium with a servo layer.

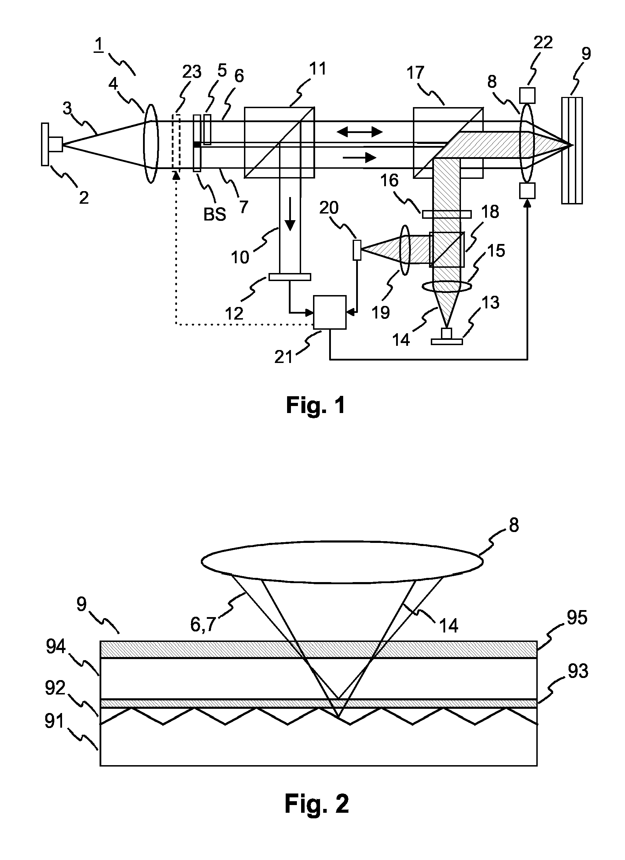

In holographic data storage digital data are stored by recording the interference pattern produced by the superposition of two coherent laser beams. An exemplary setup of a holographic storage system 1 is shown in Fig. 1. A source of coherent light, e.g. a laser diode 2, emits a light beam 3, which is collimated by a collimating lens 4. The light beam 3 is then divided into two separate light beams 6, 7. In the example the division of the light beam 3 is achieved using a beam splitter BS. However, it is likewise possible to use other optical components for this purpose. A spatial light modulator (SLM) 5 modulates one of the two beams, the so called "object beam" 6, to imprint a 2-dimensional data pattern. Both the object beam 6 and the further beam, the so called "reference beam" 7, are focused into a holographic recording medium 9, e.g. a holographic disk, by an objective lens 8. The position of the objective lens 8 is controlled by an actuator 22. At the intersection of the object beam 6 and the reference beam 7 an interference pattern appears, which is recorded in a photosensitive layer of the holographic recording medium 9.

The stored data are retrieved from the holographic recording medium 9 by illuminating a recorded hologram with the reference beam 7 only. The reference beam 7 is diffracted by the hologram structure and produces a copy of the original object beam 6, the reconstructed object beam 10. This reconstructed object beam 10 is collimated by the objective lens 8 and directed onto a 2-dimensional array detector 12, e.g. a CCD-array, by a first beam splitter 11. The array detector 12 allows to reconstruct the recorded data.

In order to simplify positioning of the object and reference beams 6, 7 relative to the holographic recording medium 9, the holographic recording medium 9 is provided with a servo layer. The holographic storage system 1 includes a further light source 13 for generating a servo light beam 14. The servo light beam 14 is collimated by a further collimating lens 15 and coupled into the beam path of the object and reference beams 6, 7 by a second beam splitter 17. The servo light beam 14 is then focused onto the servo layer by the objective lens 8. The light beam reflected by the servo layer is again collimated by the objective lens 8 and directed towards a detector 20 by the second beam splitter 17 and a third beam splitter 18. A lens 19 focuses the reflected light beam onto the detector 20. A servo system 21 evaluates the output signals of the detector 20 and controls the position of the objective lens 8 accordingly with the actuator 22. The servo system 21 also receives an output signal of the 2-dimensional array detector 12, which will be explained later on. The servo light beam 14 advantageously has a different wavelength than the object and the reference beams 6, 7. In this case a wavelength selective beam splitter can be used as the second beam splitter 17. Preferably, the servo light beam 14 in addition is a linearly polarized light beam, which allows to implement the third beam splitter 18 as a polarization selective beam splitter. The path of the servo light beam 14 then includes a quarter wave plate 16 for rotating the direction of polarization of the reflected servo light beam 14 by 90 degrees relative to the direction of polarization of the servo light beam 14 emitted by the light source 13.

As described above, the servo light beam 14 is focused onto the holographic recording medium 9 with the same objective lens 8 as the light beams 6, 7 used for holographic recording. As the holographic light beams 6, 7 and the servo light beam 14 are fixed relatively to each other, the servo light beam 14 acts as a reference for the light beam 6, 7 used for holographic recording. Due to their different wavelengths and their different collimation the holographic light beams 6, 7 and the servo light beam 14 have different foci. The holographic storage system 1 is designed in such way that the foci of the holographic light beams 6, 7 are at their nominal position when the servo light beam 14 is focused correctly on the servo layer. A defocus is detected and corrected by the servo system 21 based on the servo light beam 14. The foci of the holographic light beams 6, 7 are moved in the same way, as all light beams 6, 7, 14 use the same objective lens 8.

A cross sectional view of the conditions inside the holographic recording medium 9 is shown in Fig. 2. The holographic recording medium 9 has a holographic layer 94 and a servo layer 92. The servo light beam 14 is focused onto a guiding structure of the servo layer 92, whereas the holographic light beams 6, 7 are focused into the holographic layer 94 as appropriate for the chosen holographic recording process. The servo layer 92 is arranged above a substrate 91 and separated from the holographic layer 94 by an intermediate layer 93, which is transparent for the wavelength of the servo light beam 14, but reflective for the wavelength of the holographic light beams 6, 7. Located above the holographic layer 94 is a cover layer 95. It is likewise possible to place the servo layer 92 above the holographic layer 94, separated by an adapted intermediate layer 93. In this case, however, the distortions of the holographic light beams 6, 7 caused by the servo layer 92 have to be compensated, e.g. by increasing the distance between the holographic layer 94 and the servo layer 92 such that the holographic beams 6, 7 have a comparatively large diameter when passing the servo layer 92.

The concept of using a servo layer 92 relies upon both a fixed relation between the foci of the holographic light beams 6, 7 and the servo light beam 14, as well as a fixed relation between the holographic layer 94 and the servo layer 92. However, the optimal focus position of the holographic light beams 6, 7 may differ from this fixed relation due to tolerances in the optics of the holographic storage system 1, or due to tolerances of the holographic storage medium 9. For example, the relation can be slightly different in different holographic storage systems 1. Differences between the optimal focus positions do not only concern the vertical distance between the foci, but also the horizontal alignment in track direction and perpendicular to the track direction. The consequence is that the holographic light beams 6, 7 are not focused in an optimal way even though the servo light beam 14 is. This degenerates the image quality and increases the bit error rate.

To overcome this problem additional focus error signals are generated in the servo system 21 from the detector image obtained by the 2-dimensional array detector 12, i.e. from the reconstructed data. A defocus of the holographic light beams 6, 7 leads to a blurring of the image on the 2-dimensional array detector 12. Using image processing algorithms a 'sharpness index' for the image is generated. One possibility for determining the sharpness index is to detect the strength of high spatial frequencies. Of course, other methods, e.g. similar to those used in auto focus systems of digital cameras, may also be used. Deviations in track direction and perpendicular to the track direction may be detected, for example, from a shift of the image of the datapage relative to the detector 12. Then, an offset to the actual focus is applied by the servo system 21. At the same time the sharpness index and/or the shift of the image of the datapage relative to the detector 12 are monitored. If the image becomes sharper and/or the shift is reduced, the offset is increased. If the sharpness index indicates a stronger blurring of the image and/or the shift increases, the offset is decreased. An additional control loop of the servo system 21 ensures that the image is always as sharp as possible and that the shift of the image is always as small as possible. This additional control loop may operate much slower than the conventional servo control loop used for the servo light beam 14, since it just eliminates differences in the relation between the foci of the servo light beam 14 and the holographic light beams 6, 7. The applied offset also affects the focus position of the servo light beam 14. This is not critical if the offset is not too large, which is fulfilled when just the tolerances within the optics or the holographic storage medium 9 are corrected. A further solution, which completely avoids any defocusing of the servo light beam 14, is to add and position an additional lens or another optical element 23, which only influences the holographic light beams 6, 7. The additional optical element 23 is preferably also controlled by the servo system 21.

## Claims

**1.** Method for servo control in a holographic storage system (1) for holographic storage media (9) with a servo layer (92) for generating a servo signal using a servo light beam (14), **characterized in that** an additional servo signal is generated from a reconstructed signal beam (10).

**2.** Method according to claim 1, **wherein** the additional servo signal is generated by analyzing a detector image of the reconstructed signal beam (10).

**3.** Method according to claim 2, **wherein** a sharpness index of the detector image of the reconstructed signal beam (10) is determined.

**4.** Method according to one of claims 1 to 3, **wherein** an offset is added to a control loop used for the servo light beam (14) in response to the additional error signal.

**5.** Method according to one of claims 1 to 3, **wherein** an additional light beam influencing element (23) for a reference beam (7) of the holographic storage system (7) is adjusted in response to the additional error signal.

**7.** Method according to claim 5, **wherein** the additional light beam influencing element (23) is one of a lens, a liquid crystal element, and an optical element with a variable focal length.

**8.** Servo controller for a holographic storage system (1) for holographic storage media (9) with a servo layer (92) for generating a servo signal using a servo light beam (14), **characterized in that** the servo controller is adapted to generate an additional servo signal from a reconstructed signal beam (10).

**9.** Servo controller according to claim 8, **including** an image processor for determining a sharpness index of a detector image of the reconstructed signal beam (10).

**10.** Holographic storage system (1) for holographic storage media (9) with a servo layer (92), **characterized in that** it is adapted for performing a method according to one of claims 1 to 7 or a servo controller according to claims 8 or 9 for servo control.
